# EUROPÄISCHE PATENTSCHRIFT

(11) **EP 0 819 151 B1**
(45) Veröffentlichungstag und Bekanntmachung des Hinweises auf die Patenterteilung: **02.07.2003**
(21) Anmeldenummer: 96909168.5
(22) Anmeldetag: 02.04.1996
(51) Int. Cl.: C09J 11/04, G02B 6/42

(54) **KOMPOSITKLEBSTOFF FÜR OPTISCHE UND OPTOELEKTRONISCHE ANWENDUNGEN**
COMPOSITE ADHESIVE FOR OPTICAL AND OPTO-ELECTRONIC APPLICATIONS
ADHESIF COMPOSITE POUR APPLICATIONS OPTIQUES ET OPTOELECTRONIQUES

(30) Priorität: 03.04.1995 DE 19512427
(43) Veröffentlichungstag der Anmeldung: 21.01.1998
(73) Patentinhaber: INSTITUT FÜR NEUE MATERIALIEN gemeinnützige GmbH, 66123 Saarbrücken (DE)
(72) Erfinder: SCHMIDT, Helmut, D-66130 Saarbrücken-Güdingen (DE); MENNIG, Martin, D-66287 Quierschied (DE); JONSCHKER, Gerhard, D-66583 Spiesen-Elversberg (DE); GERHARD, Volker, D-66125 Saarbrücken (DE); Winkler, Ralf-Peter, D-67433 Neustadt (DE)
(74) Vertreter: Barz, Peter, Dr.
(86) Internationale Anmeldenummer: EP9601448
(87) Internationale Veröffentlichungsnummer: WO96031572

(56) Entgegenhaltungen:
- EP-A- 0 219 242
- EP-A- 0 459 614
- EP-A- 0 609 841
- GB-A- 2 218 104
- US-A- 5 244 707
- US-A- 5 343 544
- DATABASE WPI Section Ch, Week 9348 Derwent Publications Ltd., London, GB; Class A21, AN 93-383148 XP002006513 & JP,A,05 287 082 (NITTO DENKO CORP) , 2.November 1993
- PATENT ABSTRACTS OF JAPAN vol. 016, no. 457 (P-1426), 22.September 1992 & JP,A,04 163425 (NEC CORP), 9.Juni 1992,
- PATENT ABSTRACTS OF JAPAN vol. 014, no. 406 (C-0754), 4.September 1990 & JP,A,02 153816 (SHIN ETSU CHEM CO LTD), 13.Juni 1990,
- DATABASE WPI Derwent Publications Ltd., London, GB; AN 88-34014 XP002006514 & JP,A,62 295 029 (HITACHI KK) , 22.Dezember 1987
- DATABASE WPI Section Ch, Week 9523 Derwent Publications Ltd., London, GB; Class A21, AN 95-175415 XP002007362 & JP,A,07 097 477 (NITTO DENKO CORP) , 11.April 1995

## Beschreibung

Die Erfindung betrifft einen Kompositklebstoff für optische und optoelektronische Anwendungen, z.B. zum Verbinden einzelner Komponenten wie Lichtleitfasern oder zum Aufbau von (Integriert-)-Optischen Chips (IO-Chips), zur Herstellung von Lichtleitfaser-Chip-Kopplungen etc.

Derzeit werden in der Optoelektronik zum Verbinden von Komponenten aus verschiedenen Materialien, z.B. SiO₂-Lichtleitfasern und IO-Chips aus Glas, Silicium, Lithiumniobat oder Halbleitern, und zum Aufbau von optischen Komponenten aus diesen Materialien verschiedene organische, transparente UV- oder thermisch härtende Klebstoffe eingesetzt.

Dabei wird höchste Präzision beim Justieren der zu verbindenden Teile verlangt (±0,1 µm), damit z.B. bei Faser-Chip-Kopplungen die Lichtwellenleiter in der Faser und im Chip genau aufeinanderstoßen, so daß die Übertragungsverluste für das Licht minimiert werden können. Weiterhin wird gefordert, daß die Klebverbindung im Temperaturbereich von -45°C bis +85°C (bzw. +135°C) stabil bleibt und nicht dejustiert wird.

Diese Anforderungen werden von herkömmlihcen Klebstoffen nicht in zufriedenstellender Weise erfüllt. Sie reißen oft bei Temperaturen unterhalb -40°C und die Klebverbindung wird bei erhöhten Temperaturen, bedingt durch den relativ hohen thermischen Ausdehnungskoeffizienten des organischen Klebers, zu stark dejustiert oder der Klebstoff kann zerstört werden.

Es ist aus dem Stand der Technik bekannt, daß man z.B. das Aushärteverhalten (Schrumpfung) von transparentem Klebstoff verbessern kann, indem man fein gemahlenen (Partikelgröße im µm-Bereich), bereits ausgehärteten Klebstoff mit nicht gehärtetem vermischt. Dadurch erhöht sich jedoch zwangsläufig die Viskosität des Klebers, so daß je nach Anwendungsfall die Menge an zusetzbarem Feststoff auf wenige % begrenzt ist. Außerdem kann auf diese Weise keine qualitative Veränderung in den Eigenschaften (z.B. eine Erhöhung der thermischen Beständigkeit oder eine Verringerung des thermischen Ausdehnungskoeffizienten) des ausgehärteten Kompositklebers erzielt werden. Bei Verwendung anorganischer Pulver mit Partikelgrößen im µm- oder sub-µm-Bereich verringert sich die Transparenz durch Lichtstreuung. Dies trifft mit gewissen Einschränkungen auch auf agglomerierte Pulver aus nanoskaligen Primärpartikeln (z.B. Aerosile) zu.

Ziel der Erfindung ist es, Kompositklebstoffe für optische und optoelektronische Anwendungen bereitzustellen, die zumindest im Temperaturbereich von -45°C bis +85°C (besser noch bis 135°C) funktionstüchtig sind, eine geringe optische Streuung und Dämpfung ergeben und eine für die Anwendung ausreichende Klebkraft aufweisen. Außerdem sollen diese Klebstoffe eine für ihre Handhabung vorteilhafte Viskosität aufweisen.

Ein weiteres Ziel besteht darin, mit Hilfe dieser Kompositklebstoffe hergestellte optische und optoelektronische Elemente bereitzustellen.

Gegenstand der Erfindung sind Kompositklebstoffe für optische und optoelektronische Anwendungen gemäß Auspruch 1.

Überraschenderweise wurde gefunden, daß man bei agglomeratfreiem Einbau nanoskaliger Teilchen in organische bzw. organisch-anorganische Polymerklebstoffe nicht nur die optische Transparenz aufrechterhalten kann, sondern gleichzeitig einen bis dahin unbekannten qualitativen Sprung in den mechanischen und thermomechanischen Eigenschaften erzeugen kann, der die Gebrauchseigenschaften der Kleber nachhaltig verbessert.

Entscheidend dafür ist, daß man die nanoskaligen Teilchen nicht als agglomerierte Pulver sondern als stabilisierte, agglomeratfreie Suspensionen in den Klebstoff integriert und durch eine geeignete Oberflächenmodifikation der Teilchen den agglomeratfreien Zustand auch nach Abzug des überschüssigen Lösungsmittels aus dem Klebstoff beibehält. Dies geschieht z.B. durch eine Anpassung der Polarität von Matrix und Partikel. Auf diese Weise treten Matrix und Partikel aber auch in relativ starke Wechselwirkungsbeziehungen, die nach dem Aushärten des Klebstoffs zu Grenzflächenstrukturen im Komposit führen, die vermutlich für die beobachteten qualitativen Eigenschaftsänderungen verantwortlich sind. Der nanodisperse Einbau wirkt sich vermutlich in zweifacher Weise aus:

Zum einen führt er zu Wechselwirkung zwischen Partikel und Matrix, die das Matrixmaterial an den inneren Grenzflächen zu den Partikeln verändern und so zu inneren Grenzflächenstrukturen mit neuen Eigenschaften führen. Zum anderen wird durch den nanoskaligen Einbau bewirkt, daß der Volumenanteil dieser inneren Grenzflächen am gesamten Kompositmaterial durch die große Oberfläche der Nanopartikel sehr groß wird, so daß die den Grenzflächen zuzuschreibenden Eigenschaftsänderungen auch makroskopisch deutlich beobachtbar werden.

Diese Art der Nanokompositierung erreicht man, indem man entweder von naturgemäß agglomerierten Pulvern (z.B. Aerosilen) ausgeht und durch Dispergierung in einem geeigneten (klebstofffremden) Medium die weichen Agglomerate dauerhaft bricht (z.B. durch Verwendung von Methacrylsäure(ester), siehe Beispiel 1) oder daß man von vornherein stabilisierte nanoskalige Suspensionen (z.B. Kieselsole) einsetzt. Auch hier ist jedoch entscheidend, daß man (z.B. durch geeignete Oberflächenmodifikationen) den agglomeratfreien Zustand im Komposit aufrechterhält, um die oben beschriebene kausale Kette zur Erzeugung der neuen Eigenschaften zu realisieren.

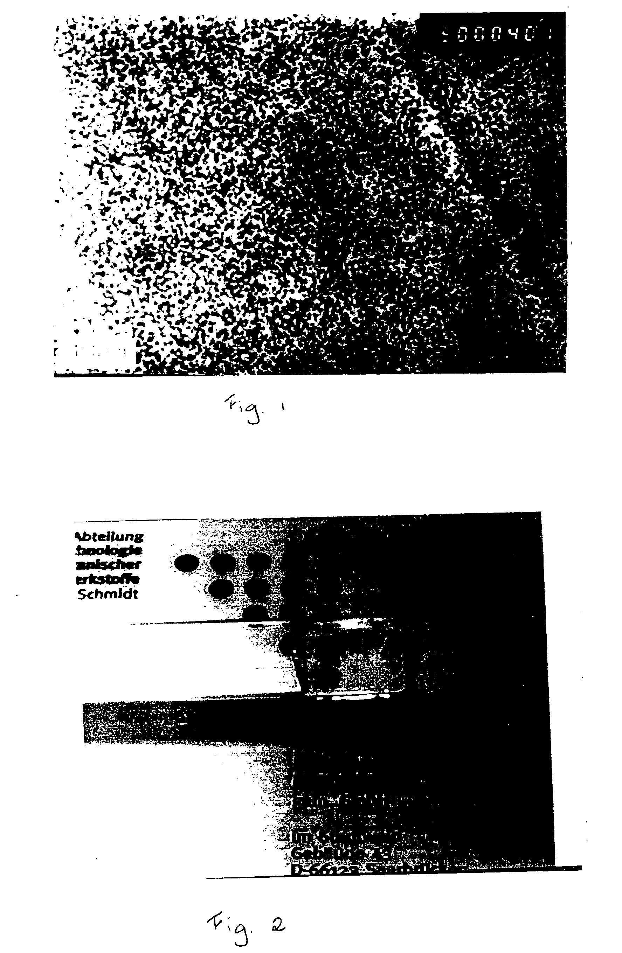

Dies sei anhand der anliegenden Figuren 1 bis 4 erläutert.

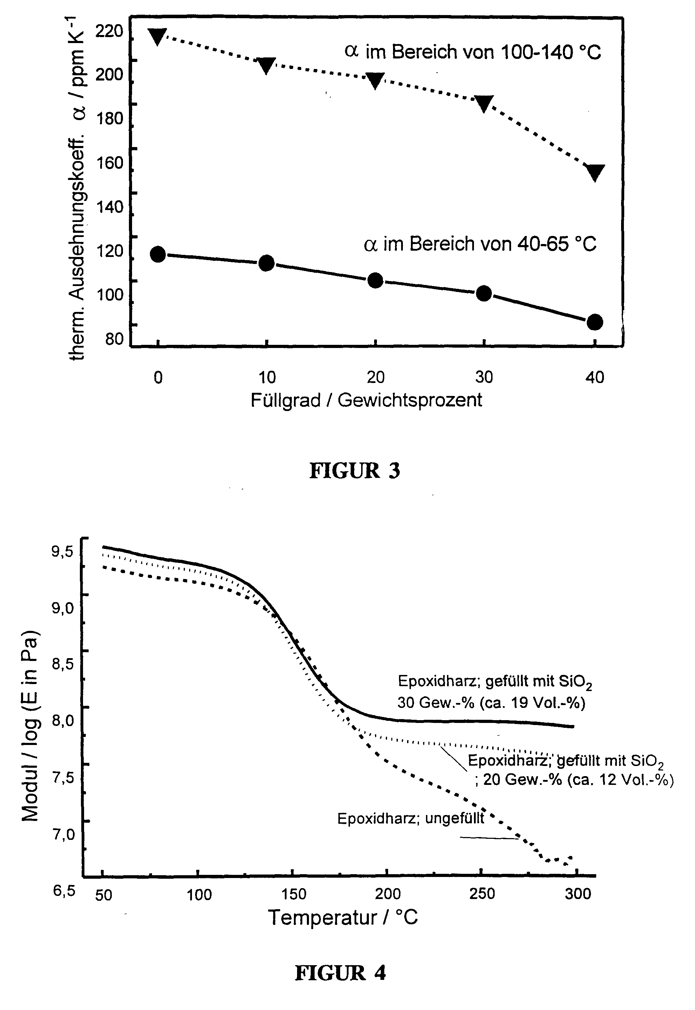

Figur 1 zeigt die elektronenmikroskopische Aufnahme eines Kompositklebstoffs mit nanoskaligen SiO₂-Partikeln in einer Epoxidharzmatrix. Durch die Art der Herstellung des Komposits und die dazu verwendeten Ausgangsstoffe (siehe Beispiel 3) erreicht man, daß der völlig agglomeratfreie Einbau der SiO₂-Partikel auch im ausgehärteten Kleber (Figur 1) erhalten bleibt. Figur 2 zeigt am Beispiel einer Glasverklebung mit diesem Klebstoff, daß in diesem Fall die Transparenz des Klebstoffs völlig erhalten bleibt, was seinen Einsatz für optische Anwendungen besonders begünstigt. Sollte die Transparenz in einer anderen Anwendung stören, kann man sie durch den zusätzlichen Einbau größerer Teilchen und/oder durch lichtabsorbierende Zusätze auch verringern, ohne daß man die Gewinne an thermomechanischen Eigenschaften einbüßt, die in den Figuren 3 und 4 dokumentiert sind. Man erkennt in Figur 3, daß der thermische Ausdehungskoeffizient z.B. im Temperaturbereich von 40 - 65°C von ca. 120 ppm/K mit wachsendem Füllgrad deutlich sinkt und bei einem Füllgrad von 40 Gewichtsprozent (entspricht ca. 20 Vol.%) nur noch ca. 80 ppm/K beträgt. Dies ist gegenüber dem ungefüllten Klebstoff eine Abnahme um nicht weniger als 33%. Noch drastischer sind die Eigenschaftsänderungen bezüglich der thermischen Stabilität, wie aus Figur 4 hervorgeht. Während der Elastizitätsmodul des ungefüllten Klebstoffs für Temperaturen oberhalb der Transformationstemperatur (ca. 150°C) stetig sinkt, was auf eine Zerstörung des Materials hindeutet, ist bereits bei einem Füllgrad von nur 12 Vol.% sehr deutlich zu erkennen, daß zum einen die Elastizitätsmodulabnahme oberhalb T_{g} deutlich geringer als im ungefüllten Zustand ist und zum anderen der Klebstoff seine mechanischen Eigenschaften bis zu Temperaturen von 300°C beibehält.

Es sei darauf hingewiesen, daß die hohen Füllgrade mit einer Viskositätserhöhung des nicht ausgehärteten Klebstoffs um nur 2 - 3 Größenordnungen verbunden waren, was seine Anwendung nicht wesentlich behindert. Dies ist ebenfalls nur möglich, wenn (z.B. durch die Oberflächenmodifikation der Partikel) die Wechselwirkungen der Partikel mit der Klebstoffmatrix so eingestellt sind, daß auch im Klebstoff die Agglomeration der Partikel verhindert wird. Andernfalls erhält man ein pastöses, zähes Material, das als Klebstoff nicht verwendet werden kann.

Die erfindungsgemäßen Kompositklebstoffe für optische und optoelektronische Anwendungen zeichnen sich besonders dadurch aus, daß
- sie durch eine innere Grenzflächenphase neue mechanische und thermomechanische Eigenschaften aufweisen, insbesondere einen verringerten thermischen Ausdehnungskoeffizienten und eine erhöhte Temperaturbeständigkeit
- ihre optischen Eigenschaften durch die Nanopartikel in weiten Bereichen einstellbar sind; insbesondere ist es möglich, trotz hohem Füllgrad völlig transparente Klebstoffe zu realisieren.

Als erfindungsgemäß verwendbare Polymere eignen sich beliebige bekannte, als Klebstoffe verwendbare transparente Kunststoffe, z.B. Polyacrylsäure, Polymethacrylsäure, Polyacrylate, Polyacrylamide, Polycarbamide, Polymethacrylate, Polyolefine, Polystyrol, Polyamide, Polyimide, Polyvinylverbindungen, wie Polyvinylchlorid, Polyvinylalkohol, Polyvinylbutyral, entsprechende Copolymere, z.B. Poly(ethylen-vinylacetat), Polyester, z.B. Polyethylenterephthalat oder Polydiallylphthalat, Polyarylate, Polycarbonate, Polyether, z.B. Polyoxymethylen, Polyethylenoxid oder Polyphenylenoxid, Polyetherketone, Polysulfone, Polyepoxide, Fluorpolymere, Polysiloxane, Organopolysiloxane oder mit Metallen und Übergangsmetallen gebildete Heteropolysiloxane, wie sie z.B. in den EP-A-36648 und EP-A-223067 beschrieben sind, sowie Mischungen von zwei oder mehrerern dieser Polymere, soweit sie miteinander verträglich sind. Anstelle der genannten Polymere können auch deren Oligomere und/oder Vorstufen (Monomere) eingesetzt werden.

Unter diesen Polymeren sind in organischen Lösungsmitteln lösliche, transparente Polymere, wie Polyacrylate, Polymethacrylate (z.B. PMMA), Epoxidharze und Polyvinylbutyral besonders bevorzugt.

Bei den nanoskaligen anorganischen Teilchen handelt es sich z.B. um Oxide wie CaO, ZnO, CdO, SiO₂, TiO₂, ZrO₂, CeO₂, SnO₂, PbO, Al₂O₃, In₂O₃ und La₂O₃; Sulfide wie CdS und ZnS; Selenide wie GaSe, CdSe oder ZnSe; Telluride wie ZnTe oder CdTe; Halogenide wie NaCl, KCl, BaCl₂, AgCl, AgBr, AgI, CuCl, CuBr, CdI₂ oder PbI₂; Carbide wie CeC₂; Arsenide wie AlAs, GaAs oder CeAs; Antimonide wie InSb; Nitride wie BN, AIN, Si₃N₄ oder Ti₃N₄; Phosphide wie GaP, InP, Zn₃P₂ oder Cd₃P₂; Carbonate wie Na₂CO₃, K₂CO₃, CaCO₃, SrCO₃ und BaCO₃; Carboxylate, z.B. Acetate wie CH₃COONa und Pb(CH₃COO)₄; Phosphate; Sulfate; Silicate; Titanate; Zirkonate; Aluminate; Stannate; Plumbate und entsprechende Mischoxide, deren Zusammensetzung vorzugsweise der Zusammensetzung herkömmlicher Gläser mit niedrigem thermischen Ausdehnungskoeffizienten entspricht, z.B. binäre, tertiäre oder quaternäre Kombinationen von SiO₂, TiO₂, ZrO₂ und Al₂O₃. Ebenfalls geeignet sind z.B. Mischoxide mit Perowskit-Struktur wie BaTiO₃ oder PbTiO₃. Außerdem können organisch modifizierte anorganische Teilchen wie z.B. partikuläre Polymethylsiloxane, methacrylfunktionalisierte Oxidpartikel und Salze der Methylphosphorsäure verwendet werden.

Die Herstellung dieser nanoskaligen Partikel kann auf übliche Weise erfolgen, z.B. durch Flammhydrolyse, Flammpyrolyse und Plasmaverfahren [siehe A.N. Dubrovina et al., Kristallografiya, 26(1981) 637-639], Kolloidtechniken [siehe E. Matijevic, "Preparation and Interaction of Colloids of Interest in Ceramics" in "Ultrastructure Processing of Advanced Ceramics", Hsg.: J.D. Mackenzie, D.R. Ulrich, John Wiley & Sons, New York (1988) 429, und andere Publikationen von E. Matijevic et al.], Sol-Gel-Prozesse [siehe R. Naß, H. Schmidt, Journal of Non-Crystalline Solids 121 (1990) 329-333; M.A. Anderson et al., Journal of Membrane Science, 39 (1988) 243-258], kontrollierte Nucleations- und Wachstumsprozesse [siehe z.B. L. Spanhel und M.A. Anderson, J. Amer. Chem. Soc. 113 (1991) 2826-2833; Iler, The Chemistry of Silica, Wiley & Sons, New York 1979], MOCVD-Verfahren [siehe G.B. Springfellow "Organometallic Vapor Phase Epitaxy; Theory and Practice", Academic Press, New York (1989), Emulsionsverfahren [siehe DE 4118185 A1] und die in den DE 4130550 A1 und DE 4133621 A1 beschriebenen Verfahren.

Die nanoskaligen Partikel haben gewöhnlich eine Teilchengröße von 1 bis 200 nm, vorzugsweise 2 bis 50 nm und insbesondere 5 bis 20 nm. Sie bestehen vorzugsweise aus anorganischen Materialien mit niedrigem thermischen Ausdehnungskoeffizienten, wobei Materialien mit einem Ausdehnungskoeffizienten < 10⁻⁴ K⁻¹ besonders bevorzugt sind. Einen sehr niedrigen thermischen Ausdehnungskoeffizienten von 5 x 10⁻⁷ K⁻¹ haben z.B. SiO₂-Partikel, die beim Dispergieren in der Polymermatrix den zusätzlichen Vorteil einer thixotropen Wirkung besitzen. Dieser thixotrope Effekt beruht vermutlich auf der Ausbildung eines perkolierenden Gerüsts, bei dem die Partikel miteinander in Berührung sind. Die viskositätsverändernden Eigenschaften der nanoskaligen Teilchen lassen sich durch geeignete Oberflächenmodifizierung einstellen. Besonders bevorzugt sind stabilisierte kolloidale, nanodisperse Sole von anorganischen Teilchen wie z.B. Kieselsole der Fa. BAYER, SnO₂-Sole der Fa.

Goldschmidt, TiO₂-Sole der Fa. MERCK, SiO₂-, ZrO₂-, Al₂O₃-, Sb₂O₃-Sole der Fa. Nissan Chemicals oder Aerosildispersionen der Fa. DEGUSSA.

Der Volumenanteil der nanoskaligen Teilchen in dem Kompositklebstoff beträgt gewöhnlich 1 bis 50 Vol.-%, vorzugsweise 1 bis 30 Vol.-% und insbesondere 5 bis 20 Vol.-%.

Die nanoskaligen Teilchen bestehen vorzugsweise aus einem Material, dessen Brechungsindex im UV-VIS-NIR-Wellenlängenbereich (10 bis 10.000 nm) annähernd dem Brechungsindex der Polymermatrix entspricht. Die Polymermatrix hat gewöhnlich einen Brechungsindex von 1,2 bis 2,0, vorzugsweise 1,3 bis 1,7. Falls ein bestimmtes Teilchenmaterial nicht den gewünschten Brechungsindex aufweist, können Brechungsindexmodifizierende Zusätze verwendet werden. Beispielsweise könnten SiO₂-Partikel mit TiO₂ oder ZrO₂ modifiziert werden.

Die gegenseitige Anpassung der Brechungsindices von Polymermatrix und nanoskaligen Teilchen kann jedoch auch dadurch erfolgen, daß man zwei oder mehr miteinander verträgliche Polymere, Oligomere und Monomere (a) oder nichtreaktive Zusatzstoffe von unterschiedlichem Brechungsindex in einem Mengenverhältnis abmischt, bei dem der Brechungsindex der Polymermischung annähernd dem Brechungsindex der nanoskaligen Teilchen entspricht.

Beispielsweise kann bei Verwendung von Polymethylmethacrylat (PMMA) als transparenter Komponente a) Styrol zugemischt werden, das nach der Polymerisation zu Polystyrol eine Erhöhung des Brechungsindex bewirkt.

Zur Oberflächenmodifizierung der nanoskaligen Teilchen können z.B. Stoffe vewendet werden, die mehrer Funktionen (z.T. parallel) erfüllen können. Sie können z.B.
1. die Agglomeration der Teilchen bei der Klebstoffherstellung verhindern
2. das rheologische Verhalten der Kleber auch bei hohen Füllgraden (≥18 Vol.-%) durch Einstellen der Wechselwirkungskräfte zwischen den Teilchen und der Klebstoffmatrix und/oder anderen benachbarten Teilchen den Erfordernissen anpassen
3. trotz hoher Füllgrade (≥ 18 Vol.-%) die Transparenz des Füllstoffs vor allem im VIS-NIR-Bereich aufrechterhalten
4. durch Reaktionen mit der Klebstoffmatrix und/oder anderen Teilchen die mechanischen, thermomechanischen und die adhäsiven bzw. kohäsiven Eigenschaften der Klebstoffe im ausgehärteten Zustand in weiten Bereichen einstellen.

Als Oberflächenmodifikator, d.h. als oberflächenmodifizierende niedrigmolekulare organische (= kohlenstoffhaltige) Verbindung, die über mindestens eine funktionelle Gruppe verfügt, die mit an der Oberfläche der Pulverteilchen vorhandenen Gruppen und der Klebstoffmatrix reagieren und/oder (zumindest) wechselwirken kann, eignen sich insbesondere Verbindungen mit einem Molekulargewicht, das nicht höher als 500, vorzugsweise nicht höher als 350 und insbesondere nicht höher als 200 ist. Derartige Verbindungen sind vorzugsweise unter Normalbedingungen flüssig und weisen vorzugsweise nicht mehr als insgesamt 15, insbesondere nicht mehr als insgesamt 10 und besonders bevorzugt nicht mehr als 8 Kohlenstoffatome auf. Die funktionellen Gruppen, die diese Verbindungen tragen müssen, richten sich in erster Linie nach den Oberflächengruppen des jeweils eingesetzten nanoskaligen Materials und darüber hinaus auch nach der gewünschten Wechselwirkung mit der Klebstoffmatrix. So kann z.B. zwischen den funktionellen Gruppen der oberflächenmodifizierenden Verbindung und den Oberflächengruppen der Partikel eine Säure/Base-Reaktion nach Bronsted oder Lewis stattfinden (einschließlich Komplexbildung und Adduktbildung). Ein Beispiel für eine andere geeignete Wechselwirkung ist die Dipol-Dipol-Wechselwirkung. Beispiele für geeignete funktionelle Gruppen sind Carbonsäuregruppen, (primäre, sekundäre, tertiäre und quartäre) Aminogruppen und C-H-acide Gruppierungen. Es können auch mehrere dieser Gruppen gleichzeitig in einem Molekül vorhanden sein (Betaine, Aminosäuren, EDTA, usw.).

Demgemäß sind Beispiele für bevorzugte Oberflächenmodifikatoren gesättigte oder ungesättigte Mono- und Polycarbonsäuren (vorzugsweise Monocarbonsäuren) mit 1 bis 12 Kohlenstoffatomen (z.B. Ameisensäure, Essigsäure, Propionsäure, Buttersäure, Pentansäure, Hexansäure, Acrylsäure, Methacrylsäure, Crotonsäure, Citronensäure, Adipinsäure, Bernsteinsäure, Glutarsäure, Oxalsäure, Maleinsäure und Fumarsäure) sowie deren Ester (vorzugsweise C₁-C₄-Alkylester) und Amide, z.B. Methylmethacrylat.

Beispiele für weitere geeignete Oberflächenmodifikatoren sind quartäre Ammoniumsalze der Formel NR¹R²R³R⁴⁺X⁻ worin R¹ bis R⁴ gegebenenfalls voneinander verschiedene aliphatische, aromatische oder cycloaliphatische Gruppen mit vorzugsweise 1 bis 12, insbesondere 1 bis 6 Kohlenstoffatomen darstellen und X⁻ für ein anorganisches oder organisches Anion steht; Mono- und Polyamine, insbesondere solche der allgemeinen Formel R₃₋ₙNHₙ, worin n = 0, 1 oder 2 und die Reste R unabhängig voneinander Alkylgruppen mit 1 bis 12, insbesondere 1 bis 6 und besonders bevorzugt 1 bis 4 Kohlenstoffatomen darstellen (z.B. Methyl, Ethyl, n- und i-Propyl und Butyl) und Ethylenpolyamine (z.B. Ethylendiamin, Diethylentriamin etc.); Aminosäuren; Imine; β-Dicarbonxylverbindungen mit 4 bis 12, insbesondere 5 bis 8 Kohlenstoffatomen, wie z.B. Acetylaceton, 2,4-Hexandion, 3,5-Heptandion, Acetessigsäure und Acetessigsäure-C₁-C₄-alkylester; Silane, insbesondere Organoalkoxysilane, wie z.B. diejenigen, die zur Oberflächenmodifizierung von kolloidaler Kieselsäure eingesetzt werden (z.B. solche der allgemeinen Formel R₄₋ₘSi(OR')ₘ worin die Gruppen R und R' unabhängig voneinander C₁-C₄-Alkyl darstellen und m 1, 2, 3 oder 4 ist) ; und modifizierte Alkoholate, bei denen ein Teil der OR-Gruppen (R wie oben definiert) durch inerte organische Gruppen substituiert ist.

Zur elektrostatischen Stabilisierung der nanoskaligen Teilchen können z.B. auch die für diesen Zweck bekannten Verbindungen wie z.B. NaOH, NH₃, KOH, Al(OH)₃ eingesetzt werden, sofern sie mit der Klebstoffmatrix verträglich sind.

Die Polymere, Oligomere oder Monomere a) und die nanoskaligen Teilchen b) und gegebenenfalls die oberflächenmodifizierenden Stoffe c) können entweder als solche oder vorzugsweise als Lösung in einem organischen Lösungsmittel oder in Wasser eingesetzt werden. Beispiele für geeignete Lösungsmittel sind Alkohole wie Butanol, Ketone wie Aceton, Ester wie Ethylacetat, Ether wie Tetrahydrofuran und aliphatische, aromatische und halogenierte Kohlenwasserstoffe wie Hexan, Benzol, Toluol und Chloroform.

Die Herstellung des erfindungsgemäßen Kompositklebstoffs kann auch verschiedene Weise erfolgen.

Beispielsweise kann man die nanoskaligen Partikel in einem der oben genannten Lösungsmittel und/oder einer der oben genannten polymerisierbaren oder härtbaren Verbindungen dispergieren, z.B. unter Rühren oder mittels Ultraschall. Die erhaltene Dispersion wird dann mit dem transparenten Polymer, Oligomer und/oder Monomer entweder als solchem oder verdünnt mit einem Lösungsmittel vermischt. Das zum Verdünnen verwendete Lösungsmittel ist entweder identisch mit dem für die Dispersion verwendeten Lösungsmittel oder damit mischbar. Selbstverständlich können die nanoskaligen Partikel auch in einer Lösung des transparenten Polymers, Oligomers und/oder Monomers dispergiert werden. Alternativ können das Polymer bzw. die polymerisierbaren Verbindungen a) in einer stabilisierten Dispersion (wäßrig oder nichtwäßrig) der nanoskaligen Teilchen gelöst oder gemischt werden, gegebenenfalls unter Zusatz der oberflächenmodifizierenden Stoffe c).

Im Falle der Verwendung von polymerisierbaren oder härtbaren Verbindungen enthält der Kompositklebstoff ferner einen Polymerisations-, Polyadditions- und/oder Polykondensationskatalysator, der die Vernetzung und Härtung thermisch und/oder photochemisch induzieren kann (kollektiv als "Vernetzungsinitiator" bezeichnet).

Als Photoinitiatoren können z.B. die im Handel erhältlichen Starter eingesetzt werden. Beispiele hierfür sind Irgacure^{R} 184 (1-Hydroxycyclohexylphenylketon), Irgacure^{R} 500 (1-Hydroxycyclohexylphenylketon, Benzophenon) und andere von der Firma Ciba-Geigy erhältliche Photoinitiatoren vom Irgacure^{R}-Typ; Darocur^{R} 1173, 1116, 1398, 1174 und 1020 (erhältlich von der Firma Merck), Benzophenon, 2-Chlorthioxanthon, 2-Methylthioxanthon, 2-Isopropylthioxanthon, Benzoin, 4,4'-Dimethoxybenzoin, Benzoinethylether, Benzoinisopropylether, Benzyldimethylketal, 1,1,1-Trichloracetophenon, Diethoxyacetophenon und Dibenzosuberon.

Als thermische Initiatoren kommen u.a. organische Peroxide in Form von Diacylperoxiden, Peroxydicarbonaten, Alkylperestern, Dialkylperoxiden, Perketalen, Ketonperoxiden und Alkylhydroperoxiden in Frage. Konkrete Beispiele für derartige thermische Initiatoren sind Dibenzoylperoxid, tert.-Butylperbenzoat und Azobisisobutyronitril.

Der Vernetzungsinitiator wird, wenn eingesetzt, gewöhnlich in einer Menge von 0,1 bis 5, vorzugsweise 0,5 bis 3 Gewichtsprozent, bezogen auf die Klebstoffzusammensetzung, angewandt.

Zur Erhöhung der Viskosität oder zur Herstellung lösungsmittelfreier Kleber können die Lösungsmittel teilweise oder vollständig entfernt werden.

Der fertige Kompositklebstoff wird auf das oder die zu verbindenden Substrate aufgetragen oder diese werden in den Klebstoff getaucht. Falls keine vernetzbaren (polymerisierbaren) Gruppen enthalten sind, kann die Härtung des Klebers durch gewöhnliche Trocknung bei Temperaturen von vorzugsweise unter 150°C erfolgen.

Falls der Kompositklebstoff eine vernetzbare Verbindung enthält, wird diese nach Auftragen des Klebstoffs auf das oder die zu verbindenden Substrate in Abhängigkeit von der Art des verwendeten Vernetzungsinitiators thermisch und/oder durch Bestrahlung (z.B. mit einer UV-Lampe oder einem Laser) vernetzt und gehärtet.

Die Härtungsbedingungen (Temperatur, UV-Wellenlänge etc.) richten sich nach den Zerfallsbedingungen des Vernetzungsinitiators. Die thermische Härtung erfolgt gewöhnlich bei Temperaturen unter 150°C.

Der erfindungsgemäße Kompositkleber eignet sich zum Verbinden einzelner Komponenten von optischen oder optoelektronischen Elementen, z.B. SiO₂-Lichtleitfasern, und optischen Bauteilen, z.B. aus Glas, Silicium, Lithiumniobat, organischen Polymeren oder anorganisch-organischen Kompositmaterialien oder Halbleitern, sowie zum Aufbau von optischen oder optoelektronischen Komponenten aus diesen Materialien.

Auf Grund seiner speziellen Zusammensetzung ermöglichen die erfindungsgemäßen Kompositkleber gegenüber herkömmlichen Klebern auf diesem Anwendungsgebiet eine Verringerung des thermischen Ausdehnungskoeffizienten, eine geringere Temperaturabhängigkeit des Elastizitätsmoduls, eine Erhöhung der thermischen Beständigkeit sowie eine schnellere und gleichmäßigere Härtung. Es wird vermutet, daß diese Eigenschaftsveränderungen zumindest zum Teil auf die Wirkung innerer Grenzflächen im Komposit zurückzuführen sind, da die Klebstoff-matrix an den inneren Grenzflächen durch die Wechselwirkung mit den nanoskaligen (oberflächenmodifizierten) Teilchen strukturell verändert wird.

Die folgenden Beispiele erläutern die Erfindung.

### Beispiele

### Beispiel 1

In 20 ml Methacrylsäuremethylester werden 4,5 g SiO₂-Partikel (Aerosil^{R} R 972 der Fa. DEGUSSA) mittels Ultraschall dispergiert, mit 0,8 ml Styrol versetzt und nochmals mit Ultraschall vermischt. Hierauf werden ca. 20 ml eines handelsüblichen Acrylat-Klebstoffs (Delo-Photobond^{R} 412 oder 420 der Fa. Delo) zugegeben.

Der erhaltene Kompositklebstoff (SiO₂-Gehalt: ca. 10 Gew.-%) zeigt thixotropes Fließverhalten. Er kann innerhalb von 10 Minuten mit einer Xenon-Lampe aus einem Abstand von 20 cm bestrahlt und gehärtet werden.

### Beispiel 2

Klebstoffherstellung und Härtung erfolgen wie in Beispiel 1. Anstelle des Acrylat-Klebstoffs wird jedoch an UV-härtbarer Epoxidklebstoff (Vitralit^{R} der Fa. Panacol-Elosol) verwendet. Das Gemisch aus dem Epoxidharz und der SiO₂-Dispersion in Methacrylsäuremethylester besitzt eine um den Faktor 10 geringere Viskosität als die einzelnen Komponenten. Daher eignet sich der Klebstoff besonders für optische Anwendungen mit kleinem Klebespalt.

### Beispiel 3

10 g Nissan IPA-ST (Kieselsol von Nissan Chemical Industries, Ltd.; 30 Gew.-% SiO₂ in Isopropanol) werden unter Rühren mit 3 g einer TMAH-Lösung (1 Gew.-%.Tetramethylammoniumhydroxidpentahydrat in Isopropanol) versetzt. Anschließend werden unter Rühren 10 g Klebstoff (Panacol^{R} X-942-739-00, UVhärtendes Epoxidharz) hinzugefügt. Im nächsten Schritt wird das Lösungsmittel am Rotationsverdampfer bei 50°C und ca. 12 mbar abgezogen.

Als Klebstoff kann zum Beispiel auch ein cycloaliphatisches Diepoxid (z.B. 3,4-Epoxycyclohexylmethyl-3,4-epoxycyclohexylcarboxylat wie das Produkt K 126 der Fa. Degussa oder das Produkt UVR-6110 der Fa. Union Carbide) dienen.

Dabei wird wie oben vorgegangen, jedoch müssen 2 - 4 Gew.-% (bezogen auf das eingesetzte Harz) Photostarter zugesetzt werden. Als Starter eignen sich kationische Photostarter wie z.B. Degussa KI 85.

Die Aushärtung erfolgt mittels UV-Belichtung für 2 Min. bei einer Lampenleistung von 200 W.

Man erhält einen Kompositklebstoff, dessen Eigenschaften in den Figuren 1 bis 4 veranschaulicht bzw. dargestellt sind.

### Beispiel 4

236,1 g 3-Glycidyloxypropyltrimethoxysilan (GPTS) werden mit 27,0 g Wasser 24 h unter Rückfluß gekocht. Anschließend wird entstandenes Methanol am Rotationsverdampfer bei 70°C abgezogen.

Zu 68,3 g des so hergestellten GPTS-Kondensats werden unter Rühren 100,0 g TMAH-modifiziertes Nissan IPA-ST Kieselsol (entspricht 30,0 g SiO₂, siehe Beispiel 3) gegeben. Als Photoinitiator werden 2,1 g Triarylsulfoniumhexafluoroantimonat (KI 85 der Fa. Degussa) zugegeben. Um lösungsmittelfreie Kleber zu erhalten, wird das Lösungsmittel (Isopropanol) bei 50°C und 12 mbar am Rotationsverdampfer entfernt.

### Beispiel 5

47,6 g des GPTS-Kondensats aus Beispiel 4 werden unter Rühren mit 69,0 g TMAH-modifiziertem Nissan IPA-ST Kieselsol (entspricht 20,7 g SiO₂, siehe Beispiel 3) versetzt und am Rotationsverdampfer bei 50°C und 12 mbar vom Lösungsmittel (Isopropanol) befreit. Anschließend werden 29,5 g eines cycloaliphatischen Diepoxids (K 126 der Fa. Degussa) und 2,1 g Photoinitiator (KI 85 der Fa. Degussa) unter Rühren zugegeben.

## Patentansprüche

1. Kompositklebstoff für optische und optoelektronische Anwendungen, **dadurch gekennzeichnet, daß** er
a) mindestens ein als Klebstoff geeignetes, transparentes Polymer und/oder polymerisierbares Oligomer und/oder polymerisierbares Monomer,
b) nanoskalige anorganische Teilchen mit einer Teilchengröße bis zu 200 nm, die durch Verbindungen zur Oberflächenmodifizierung der anorganischen Teilchen oberflächenmodifiziert sind, und
c) gegebenenfalls einen Vernetzungsinitiator
enthält, wobei die oberflächenmodifizierten nanoskaligen anorganischen Teilchen in einem agglomeratfreien Zustand dispergiert vorliegen.

2. Kompositklebstoff nach Anspruch 1, **dadurch gekennzeichnet, daß** er 1 bis 50 Volumenprozent, vorzugsweise 1 bis 30 Volumenprozent, nanoskalige Teilchen enthält.

3. Kompositklebstoff nach Anspruch 1 oder 2, **dadurch gekennzeichnet, daß** die transparenten Polymere, Oligomere und/oder Monomere a) ausgewählt sind aus Poly(meth)acrylsäure, Poly(meth)acrylaten, Poly(meth)acrylamiden, Polycarbamiden, Polyolefinen, Polystyrol, Polyamiden, Polyimiden, Polyvinylverbindungen, Polyestern, Polyarylaten, Polycarbonaten, Polyethern, Polyetherketonen, Polysulfonen, Polyepoxiden, Fluorpolymeren, Organopolysiloxanen, Polysiloxanen und Heteropolysiloxanen und den entsprechenden Monomeren und/oder Oligomeren.

4. Kompositklebstoff nach irgendeinem der Ansprüche 1 bis 3, **dadurch gekennzeichnet, daß** die nanoskaligen Teilchen ausgewählt sind aus Oxiden, Sulfiden, Seleniden, Telluriden, Halogeniden, Carbiden, Arseniden, Antimoniden, Nitriden, Phosphiden, Carbonaten, Carboxylaten, Phosphaten, Sulfaten, Silikaten, Titanaten, Zirkonaten, Aluminaten, Stannaten, Plumbaten sowie Mischoxiden.

5. Kompositklebstoff nach irgendeinem der Ansprüche 1 bis 4, **dadurch gekennzeichnet, daß** die Verbindungen zur Oberflächenmodifizierung der nanoskaligen Teilchen aus der Gruppe Carbonsäuren, Carbonsäureamide, Carbonsäureester, Aminosäuren, β-Diketone, Imide, Silane mit einer oder mehreren funktionellen Gruppen oder quartäre Ammoniumsalze der allgemeinen Formel N⁺R¹R²R³R⁴X⁻ stammen, wobei die Reste R¹ bis R⁴, gleich oder verschieden voneinander, aliphatische, aromatische und/oder cycloaliphatische Gruppen sein können und X⁻ ein anorganisches oder organisches Anion darstellt.

6. Kompositklebstoff nach irgendeinem der Ansprüche 1 bis 5, **dadurch gekennzeichnet, daß** zur Oberflächenmodifizierung der nanoskaligen Teilchen NaOH, NH₄OH, KOH und/oder Al(OH)₃ eingesetzt werden, sofern sie mit der Klebstoffmatrix verträglich sind.

7. Kompositklebstoff nach irgendeinem der Ansprüche 1 bis 6, **dadurch gekennzeichnet, daß** der Vernetzungsinitiator aus Photoinitiatoren und/oder organischen Peroxiden und/oder Azoverbindungen ausgewählt ist.

8. Kompositklebstoff nach irgendeinem der Ansprüche 1 bis 7, **dadurch gekennzeichnet, daß** die nanoskaligen Teilchen und die aus den Komponenten a) und gegebenenfalls c) nach dem Härten entstehende Polymermatrix annähernd denselben Brechungsindex haben.

9. Kompositklebstoff nach Anspruch 9, **dadurch gekennzeichnet, daß** der Brechungsindex der nanoskaligen Teilchen und der Polymermatrix im Bereich von 1,2 bis 2,0, vorzugsweise 1,3 bis 1,7, liegt.

10. Optische und optoelektronische Elemente, **dadurch gekennzeichnet, daß** sie mit einem Kompositklebstoff nach irgendeinem der Ansprüche 1 bis 9 verbundene Komponenten umfassen.

11. Verfahren zur Herstellung der optischen und optoelektronischen Elemente nach Anspruch 10, **dadurch gekennzeichnet, daß** man den Kompositklebstoff nach irgendeinem der Ansprüche 1 bis 9 auf die Verbindungsstelle der Komponenten aufbringt und die Verklebung thermisch oder photochemisch härtet.

## Claims

1. Composite adhesive for optical and opto-electronic applications, **characterized in that** it contains
a) at least one transparent polymer and/or polymerizable oligomer and/or polymerizable monomer suitable for use as adhesive,
b) nanoscale inorganic particles particles having a particle size of up to 200 nm which have been surface-modified with compounds for the surface-modification of said inorganic particles, and
c) optionally, a crosslinking initiator,
said surface-modified nanoscale inorganic particles being present in dispersed agglomerate-free form.

2. Composite adhesive according to claim 1, **characterized in that** it contains 1 to 50% by volume, preferably 1 to 30% by volume, of nanoscale particles.

3. Composite adhesive according to claim 1 or 2, **characterized in that** the transparent polymers, oligomers and/or monomers a) are selected from poly(meth)acrylic acid, poly(meth)acrylates, poly(meth)-acrylic acid amides, polycarbamides, polyolefins, polystyrene, polyamides, polyimides, polyvinyl compounds, polyesters, polyarylates, polycarbonates, polyethers, polyether ketons, polysulfones, polyepoxides, fluoropolymers, organopolysiloxanes, polysiloxanes and heteropolysiloxanes and the corresponding monomers and/or oligomers.

4. Composite adhesive according to any one of claims 1 to 3, **characterized in that** said nanoscale particles are selected from oxides, sulfides, selenides, tellurides, halides, carbides, arsenides, antimonides, nitrides, phosphides, carbonates, carboxylates, phosphates, sulfates, silicates, titanates, zirconates, aluminates, stannates, plumbates and mixed oxides.

5. Composite adhesive according to any one of claims 1 to 4, **characterized in that** said compounds for the surface modification of the nanoscale particles are derived from the group consisting of carboxylic acids, carboxylic acid amides, carboxylic acid esters, amino acids, β-diketones, imides, silanes having one or more functional groups or quaternary ammonium salts of the general formula N⁺R¹R²R³R⁴X⁻, wherein the radicals R¹ to R⁴, the same or different from each other, may be aliphatic, aromatic and/or cycloaliphatic groups and X⁻ is an inorganic or organic anion.

6. Composite adhesive according to any one of claims 1 to 5, **characterized in that** NaOH, NH₄OH, KOH und/or Al(OH)₃ are employed for the surface modification of said nanoscale particles, provided they are compatible with the adhesive matrix.

7. Composite adhesive according to any one of claims 1 to 6, **characterized in that** the crosslinking initiator is selected from photo-initiators and/or organic peroxides and/or azo compounds.

8. Composite adhesive according to any one of claims 1 to 7, **characterized in that** said nanoscale particles and the polymer matrix formed from components a) and optionally c) are of appoximately the same refractive index upon curing.

9. Composite adhesive according to claim 8, **characterized in that** the refractive indices of the nanoscale particles and the polymer matrix range from 1.2 to 2.0, preferably from 1.3 to 1.7.

10. Optical and opto-electronic elements, **characterized in that** they comprise components connected by means of a composite adhesive according to any one of claims 1 to 9.

11. Process for the production of optical and opto-electronic elements according to claim 10, **characterized in that** the composite adhesive according to any one of claims 1 to 9 is applied onto the connecting joint of the components and the adhesive is cured thermally or photochemically.

## Revendications

1. Adhésif composite pour applications optiques et optoélectroniques, **caractérisé par le fait qu'**il contient
a) au moins un polymère transparent et/ou oligomère polymérisable et/ou monomère polymérisables, susceptibles d'être utilisés en tant qu'adhésif,
b) des nanoparticules minérales ayant une taille pouvant atteindre 200 nm, modifiées en surface par des composés de modifications de surfaces de particules minérales, et
c) éventuellement un amorceur de réticulation,
les nanoparticules minérales modifiées en surface étant à l'état dispersé sans agglomérats.

2. Adhésif composite selon la revendication 1, **caractérisé par le fait qu'**il contient de 1 à 50 % en volume, de préférence de 1 à 30 % en volume de nanoparticules.

3. Adhésif composite selon la revendication 1 ou 2, **caractérisé par le fait que** les polymères transparents, oligomères et/ou monomères a) sont choisis parmi le poly(acide (méth)acrylique), les poly(méth)acrylates, les poly(méth)acrylamides, les polycarbamides, les polyoléfines, le polystyrène, les polyamides, les polyimides, les polymères vinyliques, les polyesters, les polyarylates, les polycarbonates, les polyéthers, les poly(éther cétone), les polysulfones, les polyépoxydes, les polymères fluorés, les organopolysiloxanes, les polysiloxanes et hétéropolysiloxanes et les monomères et/ou oligomères correspondants.

4. Adhésif composite selon l'une quelconque des revendications 1 à 3, **caractérisé par le fait que** les nanoparticules sont choisies parmi les oxydes, sulfures, séléniures, tellurures, halogénures, carbures, arséniures, antimoniures, nitrures, phosphures, carbonates, carboxylates, phosphates, sulfates, silicates, titanates, zirconates, aluminates, stannates, plombates et oxydes mixes.

5. Adhésif composite selon l'une quelconque des revendications 1 à 4, **caractérisé par le fait que** les composés de modification de surface des nanoparticules sont choisis parmi les acides carboxyliques, les amides d'acides carboxyliques, les esters carboxyliques, les acides aminés, les β-dicétones, les imides, les silanes comportant un ou plusieurs groupes fonctionnels et les sels d'ammonium quaternaires de formule générale N+R¹R²R³R⁴, où les résidus R¹ à R⁴ sont identiques ou différents les uns des autres, aliphatiques, aromatiques et/ou cycloaliphatiques et X⁻ représenté un anion minéral ou organique.

6. Adhésif composite selon l'une quelconque des revendications 1 à 5, **caractérisé par le fait que** l'on utilise pour la modification de surface des nanoparticules du NaOH, du NH₄OH, du KOH et/ou du Al(OH)₃, dans la mesure où ces composés sont compatibles avec la matrice adhésive.

7. Adhésif composite selon l'une quelconque des revendications 1 à 6, **caractérisé par le fait que** l'amorceur de réticulation est choisi parmi les photoamorceurs et/ou les peroxydes organiques et/ou les composés azoïques.

8. Adhésif composite selon l'une quelconque des revendications 1 à 7, **caractérisé par le fait que** les nanoparticules et la matrice polymérique formée, après durcissement, à partir des composantes a) et éventuellement c), ont à peu près le même indice de réfraction.

9. Adhésif composite selon la revendication 8, **caractérisé par le fait que** l'indice de réfraction des nanoparticules et de la matrice polymérique est compris dans l'intervalle allant de 1,2 à 2,0, de préférence de 1,3 à 1,7.

10. Eléments optiques ou optoélectroniques, **caractérisés par le fait qu'**ils comprennent des composants collés par un adhésif composite selon l'une quelconque des revendications 1 à 9.

11. Procédé de fabrication d'éléments optiques ou optoélectroniques selon la revendication 10, **caractérisé par le fait que** l'on applique l'adhésif composite selon l'une quelconque des revendications 1 à 9 sur la surface à coller des composants et que l'on soumet l'assemblage collé à un durcissement thermique ou photochimique.
